(19) Europäisches Patentamt
European Patent Office
Office européen des brevets

(11) Veröffentlichungsnummer: **0 248 991**
**A2**

(12) # EUROPÄISCHE PATENTANMELDUNG

(21) Anmeldenummer: **87104656.1**

(51) Int.Cl.³: **A 01 N 25/12**

(22) Anmeldetag: **30.03.87**

(30) Priorität: **11.04.86 DE 3612161**

(43) Veröffentlichungstag der Anmeldung:
**16.12.87 Patentblatt 87/51**

(84) Benannte Vertragsstaaten:
**AT BE CH DE ES FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Antfang, Elmar, Dr.**
**Hasenstrasse 21**
**D-4019 Monheim(DE)**

(72) Erfinder: **Schnorbach, Hans-Jürgen, Dr.**
**Gerstenkamp 19**
**D-5000 Köln 80(DE)**

(72) Erfinder: **Schrader, Jörn, Dipl.-Ing.**
**Walter-Kollo-Strasse 8**
**D-4019 Monheim(DE)**

(54) **Schneckenköder.**

(57) Es werden neue Schneckenköder bereitgestellt, die aus folgenden Komponenten bestehen:

A) natives Trägermaterial,
B) molluskizider Wirkstoff,
C) Fraßstoff,
D) hydrolysestabiles Bindemittel und
E) gegebenenfalls weitere Zusatzstoffe.

Die in Kombination mit dem nativen Trägermaterial verwendeten Bindemittel geben dem gesamten Schneckenköder einerseits eine ausgezeichnete Regenfestigkeit und beeinträchtigen andererseits die Schnecken nicht in der Aufnahme von Fraßmitteln und Wirkstoff.

Ein wesentlicher Vorteil der erfindungsgemäßen Schneckenköder besteht darin, daß sie bei Verwendung des nativen Materials als Träger eine deutlich längere Wirkung entfalten. Dadurch gelangen keine nennenswerten Wirkstoffmengen in das Erdreich, die eventuell Bodenlebewesen schädigen können.

EP 0 248 991 A2

0248991

BAYER AKTIENGESELLSCHAFT 5090 Leverkusen, Bayerwerk
Konzernverwaltung RP
Patentabteilung Er/ABc

## Schneckenköder

Die vorliegende Erfindung betrifft neue Schneckenköder, ein Verfahren zur Herstellung dieser Köder und deren Verwendung zur Bekämpfung von Schnecken.

Es ist bereits bekannt geworden, Bodenschädlinge wie Schnecken mit Hilfe von Materialgemischen zu bekämpfen, die im wesentlichen aus Wirkstoff und Fraßstoff bestehen und durch Pelettierung eines Gemisches aus Wirkstoff und Fraßstoff hergestellt werden. Diese Köder, deren Durchmesser bzw. Länge 2-5 mm beträgt, sind im allgemeinen zu groß, um von den Schnecken vollständig aufgenommen zu werden. Darin ist ein entscheidender Nachteil zu sehen, denn der verbleibende Rest zerfällt im Boden, insbesondere durch Feuchtigkeitseinwirkung und stellt eine potentielle Gefahr für Bodennützlinge wie z.B. Regenwürmer dar. Werden andererseits Köder eingesetzt, deren Durchmessser unterhalb von 2 mm liegt, so sammeln sie sich nach Applikation - abhängig von der Bodenstruktur - in kleinen Erdvertiefungen, wo sie für Schnecken kaum oder gar nicht erreichbar sind.

Weiterhin ist bekannt, inerte voluminöse Trägermaterialien, die Wirkstoff und Fraßstoff auf der Oberfläche enthalten, zur Bekämpfung von Bodenschädlingen zu verwenden (DE-OS 2 512 163 und DE-OS 2 512 164). So können z.B. mit Metaldehyd beschichtete Perlit-Körner als Schneckenvertilgungsmittel eingesetzt werden. Nachteilig ist jedoch, daß diese Köder bei hoher Bodenfeuchtigkeit oder bei Regen aufgrund des Wirkungsmechanismusses von Metaldehyd nur bedingt geeignet sind.

Darüber hinaus ist bekannt, daß N-Methyl-O-(3,5-dimethyl-4-methylthio-phenyl)-carbamat zur Bekämpfung von Schnecken eingesetzt werden kann (K. Büchel "Pflanzenschutz und Schädlingsbekämpfungsmittel", Georg Thieme Verlag, 1977, Seite 107 und Godan "Schadschnecken und ihre Bekämpfung", Ulmer 1979, Seite 220). Die molluskizide Potenz der bisher üblichen durch Pelletierung hergestellten homogenen Köder dieses Wirkstoffes ist gut. Beeinträchtigend für den Einsatz dieser Produkte ist allerdings die Tatsache, daß die bisher bereitgestellten pelettierten Köder auf feuchten Böden oder durch Einwirkung von Regenwasser schon nach relativ kurzer Zeit zerfallen und/oder sich mit Schimmel überziehen. Aufgrund des Köderzerfalls kann der enthaltende Wirkstoff in unerwünschter Weise in das Erdreich gelangen. Daneben geht der pelletierte Köder aufgrund des Zerfalls für die Schneckenbekämpfung verloren.

Schließlich ist bekannt, daß handelsübliche Präparate, hergestellt auf einer Trägerbasis wie z.B. Maisspindelschrot oder Kleie eine sehr schlechte Regenfestigkeit

haben. Werden Köder dieses Typs verwendet, so zerfallen unter Beregnung die herstellungsbedingt vorliegenden Agglomerate in die Primärteilchen, die häufig durch den Regen in Erdvertiefungen gespült werden, wo sie für Schnecken praktisch nicht erreichbar sind. Ein weiterer Nachteil ist das bei Beregnung parallel mit dem Zerfall der Agglomerate einhergehende Abwaschen der Fraßmittel- und Wirkstoffschicht, so daß die für die Tiere noch erreichbaren Partikel zu deren Bekämpfung nicht beitragen können. Darüber hinaus ist die nicht ausreichende Schimmelfestigkeit eine störende Eigenschaft, da auch hier eine ökonomisch sinnvolle Bekämpfung der Pulmonaten beeinträchtigt wird, die in einem Klima mit sehr hoher Luftfeuchtigkeit, allgemein mäßigen Temperaturen und milden Wintern mit häufigen Regenfällen optimale Lebensbedingungen finden.

Es wurde nun gefunden, daß sich die obengenannten Nachteile bekannter Schneckenköder vermeiden lassen, wenn man Schneckenköder einsetzt, die aus folgenden Komponenten bestehen:

A) natives Trägermaterial,
B) molluskizider Wirkstoff,
C) Fraßstoff,
D) hydrolysestabiles Bindemittel und
E) gegebenenfalls weitere Zusatzstoffe.

Es ist als äußerst überraschend zu bezeichnen, daß die in Kombination mit den nativen Trägermitteln verwendeten

Bindemittel dem gesamten Schneckenköder einerseits eine ausgezeichnete Regenfestigkeit geben und andererseits die Schnecken in ihrer Aufnahme von Fraßmitteln und Wirkstoff nicht beeinträchtigen.

Ein wesentlicher Vorteil der erfindungsgemäßen Schneckenköder besteht darin, daß sie bei Verwendung des nativen Materials als Träger eine deutlich längere Wirkung entfalten. Dadurch gelangen keine nennenswerten Wirkstoffmengen in das Erdreich die eventuell Bodenlebewesen schädigen können.

Durch die Kombination der obengenannten Bestandteile A), B), C), D) und gegebenenfalls E) sind neue Schneckenköder zugänglich, die den bisher bekannten in überraschendem Maße überlegen sind.

Als native Trägermaterialien A) werden in den erfindungsgemäßen Schneckenködern vorzugsweise alle nativen Abfallprodukte wie z.B. Kleie, Maiskolbenschrot, Kokosschalenbruch, Tabakstengel, Korkschrot, Sägespäne, Rindenspäne u.a. verwendet, vorausgesetzt daß sie bei Raumtemperatur feste Konsistenz haben und nicht kurzfristig bei Einwirkung von Feuchte zerfallen. Weiterhin können auch Pellets, aus z.B. Maiskolbenschrot, Korkschrot, Rindenspäne u.a. als Trägermaterial eingesetzt werden.

Die nativen Trägermaterialien besitzen vorzugsweise eine Teilchengröße von 2-7 mm und insbesondere von 2-4 mm.

Als molluskizide Wirkstoffe werden in erfindungsgemäßen Schneckenködern die bekannten, in Godan "Schadschnecken und ihre Bekämpfung" zitierten Wirkstoffe, vorzugsweise Wirkstoffe aus der Klasse der Carbamate, eingesetzt. Besonders bevorzugt wird die Verbindung N-Methyl-O-(3,5-dimethyl-4-methylthio-phenyl)-carbamat eingesetzt. Es kann nur ein Wirkstoff oder ein Gemisch von Wirkstoffen eingesetzt werden.

Als Fraßstoffe können in den erfindungsgemäßen Schneckenködern alle üblichen in derartigen Ködern verwendbaren Futtersubstanzen - also für Schnecken physiologisch verwertbare Fraßstoffe - enthalten sein. Vorzugsweise in Betracht kommen gemahlenes Getreide, wie z.B. Weizenmehl, Roggenmehl, Reisstärke, Melasse, Weizenschrot, Gerstenschrot u.a. Es kann entweder nur ein Fraßstoff oder auch ein Gemisch aus mehreren Fraßstoffen vorhanden sein.

Als hydrolysestabile Bindemittel werden in den erfindungsgemäßen Schneckenködern vorzugsweise organische Kleber verwendet, die im Gemisch Schnecken in der Aufnahme von Fraßmittel und Wirkstoff nicht beeinträchtigen. Daneben bewirken sie eine notwendige Festigkeit des Köders in Gegenwart von Wasser, so daß die vorgenannten Nachteile bekannter Schneckenköder nicht zum Tragen kommen. Als geeignete Bindemittel seien genannt: Methylcellulose, Polyvinylpyrrolidon, Polyvinylalkohol, Polyvinylacetat, Polyvinylether, Polyethylenglykole, Polyacrylate, Polyethylenoxide, natürliche Wachse (pflanzlichen, tierischen oder mineralischen Ursprungs), chemisch veränderte Wachse und

synthetische Wachse (Polyethylenwachse), Polymethacrylate, Polypropylenglykole, Zucker, Dextrin, Stärke, Alginate, Ligninsulfonate, Gummiarabicum, veredelte Produkte aus Kolophonium und Ölen, Nitrolacke und Kunstharzlacke auf Basis von z.B. Alkydharzen, Chlorkautschukverbindungen, Epoxidharzen, Polyesterharzen, Polyurethanen, Phenolharzen, Aminharzen, chloriertem Polypropylen, Cyclokautschukverbindungen und Ketonharzen, u.a.

Insbesonders bevorzugt sind folgende organische Kleber: Methylcellulose, Polyvinylacetat, Polyvinylpyrrolidon, Polyacrylate und Polymethacrylate.

Als Zusatzstoffe, die in den erfindungsgemäßen Ködern enthalten sein können, kommen vorzugsweise Konservierungsmittel, Farbstoffe, Schneckenlockstoffe, Mahlhilfsmittel, Warmblütler-Repellents sowie Wasser und organische Solventien in Frage.

Als Beispiele für gegebenenfalls vorhandene Konservierungsmittel seien 2-Hydroxydiphenyl, Sorbinsäure, p-Hydroxybenzaldehyd, p-Hydroxybenzoesäuremethylester, Benzaldehyd, Benzoesäure, p-Hydroxybenzoesäurepropylester und p-Nitrophenol genannt. Als Farbstoffe, die gegebenenfalls als Zusatzstoffe in Betracht kommen, seien anorganische Pigmente, wie Eisenoxid, Titandioxid und Ferrocyanblau und organische Farbstoffe, wie Anthrachinon-, Azo- und Metallphthalocyaninfarbstoffe aufgeführt.

Als Stoffe, die einen Lockreiz auf Schnecken ausüben (Schnecken-Lockstoffe), können alle üblichen für diesen Zweck geeigneten Komponenten verwendet werden. Beispielhaft genannt seien Pflanzenextrakte und deren Folgeprodukte, sowie Produkte tierischer Herkunft.

Als Mahlhilfsmittel kommen alle üblichen für diesen Zweck verwendbaren Stoffe in Frage. Vorzugsweise genannt seien Kaoline, Tonerden, Talkum, Kreide und Quarzpulver.

Als Warmblütler-Repellents, die eine abweisende Wirkung auf warmblütige Lebewesen, wie Hunde und Igel, ausüben, können alle üblichen für diesen Zweck geeigneten Komponenten eingesetzt werden. Beispielhaft genannt sei Nonylsäurevanillylamid.

Als organische Solventien kommen die für die Herstellung von Ködern verwendbaren Lösungsmittel in Frage. Vorzugsweise in Betracht kommen niedrig siedende Solventien, wie Methanol, Ethanol, Butanol und Methylenchlorid.

Die erfindungsgemäßen Köder enthalten oben angegebene Komponenten, deren prozentuale Anteile innerhalb größerer Bereiche variiert werden können. Der Anteil des nativen Trägermaterials liegt im allgemeinen zwischen 30 und 70 Gew.-%, vorzugsweise zwischen 35 und 60 Gew.-%. Der Anteil an molluskizidem Wirkstoff liegt im allgemeinen zwischen 0,5 und 10 Gew.-%, vorzugsweise zwischen 1 und 8 Gew.-%. Der Anteil Fraßstoff beträgt im allgemeinen zwischen 10 und 70 Gew.-%, vorzugsweise zwischen 20 und 45 Gew.-%. Der Anteil an Bindemittel liegt im allgemeinen zwischen 0,5

und 10 Gew.-%, vorzugsweise zwischen 1 und 5 Gew.-%, und Zusatzstoffe sind gegebenenfalls in Anteilen zwischen 0,5 und 20 Gew.-%, vorzugsweise zwischen 0,5 und 6 Gew.-% enthalten.

Bei der Herstellung der erfindungsgemäßen Köder ist es erforderlich, den Wirkstoff in fein verteilter Form einzusetzen. Handelt es sich um Wirkstoffe mit Schmelzpunkten oberhalb von 50°C, so werden diese im allgemeinen im Gemisch mit Mahlhilfsmitteln im gemahlenen Zustand verwendet. Es ist auch möglich, feste Wirkstoffe bei erhöhter Temperatur in Form von Schmelzen allein oder in Verbindung mit inerten Hilfsmitteln, wie z.B. Wachsen, einzusetzen. Beim Einsatz von Wirkstoffen mit einem Schmelzpunkt unterhalb von 50°C werden diese Wirkstoffe im allgemeinen im Gemisch mit sorptivem Stellmittel allein oder gegebenenfalls im Gemisch mit Fraßmitteln gegebenenfalls nach einer Homogenisierung des resultierenden Gemisches verwendet.

Die Bindemittel werden bei Herstellung der erfindungsgemäßen Köder direkt oder in Form ihrer Lösungen, Emulsionen, Dispersionen oder Latices eingesetzt. Als Verdünnungsmittel kommen gegebenenfalls Wasser und/oder organische Solventien in Frage. In Betracht kommen neben Wasser auch niedrig siedende organische Lösungsmittel, wie Methanol, Ethanol, Butanol und Methylenchlorid.

Die erfindungsgemäßen Schneckenköder wurden vorzugsweise hergestellt, indem man das native Trägermaterial A) in einem Mischer gibt und entweder

a) nacheinander mit Bindemittel D), gegebenenfalls im Gemisch mit einem Verdünnungsmittel, versetzt und danach mit mindestens einem molluskiziden Wirkstoff B), Fraßstoff C), gegebenenfalls weiteren Zusatzstoffen E) und gegebenenfalls weiterem Bindemittel D), gegebenenfalls in Gegenwart eines Verdünnungsmittels, innig verrührt oder

b) zunächst mit Bindemittel D), gegebenenfalls im Gemisch mit einem Verdünnungsmittel, sowie mit Fraßstoff C) versetzt und danach mit mindestens einem molluskiziden Wirkstoff B) und mit weiteren Bindemittel D), gegebenenfalls im Gemisch mit einem Verdünnungsmittel und gegebenenfalls mit Zusatzstoffen E), innig verrührt,

und die so erhaltenen körnigen Produkte gegebenenfalls trocknet und gegebenenfallse erneut in der angegebenen Weise behandelt.

Bei der Herstellung der erfindungsgemäßen Schneckenköder werden, bezogen auf die Endformulierung 30 bis 70 Gew.-%, vorzugsweise 35 bis 60 Gew.-% natives Trägermaterial, 0,5 bis 10 Gew.-%, vorzugsweise 1 bis 8 Gew.-% molluskizider Wirkstoff, 10 bis 70 Gew.-%, vorzugsweise 20 bis 45 Gew.-% Fraßstoff, 0,5 bis 10 Gew.-%, vorzugsweise 1 bis 5 Gew.-% Bindemittel und gegebenenfalls 0,5 bis 20 Gew.-%, vorzugsweise 0,5 bis 6 Gew.-% weiterer Zusatzstoffe eingesetzt.

Das Verfahren b) kann gegebenenfalls variiert werden, indem der molluskizide Wirkstoff beispielsweise in geschmolzenem Wachs dispers verteilt auf die Fraßmittelschicht aufgebracht wird, beim Mischen abgekühlt und eine feste Hüllschicht bildet. Gegebenenfalls kann auch Fraßmittel mittels eines bei Raumtemperatur aushärtenden Bindemittels auf dem Träger angeordnet sein, gegebenenfalls in Verbindung mit Zusatzstoffen. Gegebenenfalls kann die Härtung des Bindemittels durch UV- und ionisierende Strahlung beschleunigt werden.

Bei allen Varianten können einer oder mehrere Wirkstoffe mit Hilfe eines oder mehrerer Bindemittel auf dem körnigen Trägermaterial fixiert werden. Die Reihenfolge, in der die Komponenten auf das Trägermaterial aufgebracht werden, kann in der jeweils gewünschten Weise variiert werden.

Das erfindungsgemäße Verfahren wird im allgemeinen bei Raumtemperatur durchgeführt. Sollen Wirkstoffe in Form der Schmelze oder Dispersionen in einer inerten Schmelze mit dem Träger in Kontakt gebracht werden, so ist es erforderlich, zumindest bei diesem Schritt des Verfahrens bei Temperaturen zu arbeiten, die oberhalb der Wirkstoff-Schmelzpunkte bzw. oberhalb des Schmelzbereichs der hierfür eingesetzten Hilfsmittel liegen.

Die Trocknungstemperatur (Verfahren a) und b)) kann innerhalb eines größeren Bereichs variiert werden. Im allgemeinen trocknet man bei Temperaturen zwischen 20 und 70° C, vorzugsweise zwischen 30 und 65° C. Die Trocknung kann

gegebenenfalls unter vermindertem Druck vorgenommen werden. Ferner kann die Trocknung entweder in dem zur Beschichtung des Trägermaterials dienenden Mischer oder aber in einer separaten Trocknungsapparatur erfolgen.

Das erfindungsgemäße Verfahren kann entweder diskontinuierlich oder kontinuierlich in üblichen Apparaturen durchgeführt werden.

Die erfindungsgemäßen Schneckenköder lassen sich, wie oben bereits erwähnt, sehr gut zur Bekämpfung von Schadschnecken verwenden. Zu den Schnecken gehören alle landlebenden Nackt- und Gehäuseschnecken, welche in der Mehrzahl als polyphage Schädlinge landwirtschaftlicher und gärtnerischer Kulturen auftreten. Wichtige derartige Schädlinge sind Nacktschnecken wie Arion rufus (große Wegschnecke), Arion ater und andere Arionidae, Limax-Arten, ferner Ackerschnecken, wie Deroceras reticulatum und agreste aus der Familie Limacidae, sowie Arten aus der Familie Milacidae, und außerdem Gehäuseschnecken, wie solche der Gattungen Bradybaena, Cepaea, Cochlodina, Discus, Euomphalia, Galba, Helicigona, Helix, Helicella, Helicodiscus, Lymnaea, Opeas, Vallonia und Zonitoides.

Bei der Bekämpfung von Bodenschädlingen kann die Aufwandmenge an erfindungsgemäßen Ködertypen innerhalb eines größeren Bereichs variiert werden. Im allgemeinen verwendet man zwischen 3 und 15 kg Schneckenköder pro Hektar, vorzugsweise zwischen 5 und 10 kg pro Hektar.

Die erfindungsgemäßen Schneckenköder können nach üblichen Methoden, wie z.B. durch Streuen, ausgebracht werden.

Die Herstellung und die Verwendung der erfindungsgemäßen Schneckenköder geht aus folgenden Beispielen hervor:

0248991

## I. Herstellungsbeispiele

### Beispiel 1

In einem Mischer werden 25 kg Sägespäne (Siebfraktion 2-4 mm) mit 13 kg Weizenmehl, 6 kg 0,5 %iger wäßriger Methylcellulose-Dispersion, 1,3 kg 25 %iger wäßriger Polyvinylacetat-Dispersion, 50 g Melasse, 92 g hochdisperser Kieselsäure, 200 g blauem Farbstoff und 0,6 kg fein gemahlenem N-Methyl-O-(3,5-dimethyl-4-methylthio-phenyl)-carbamat der Formel

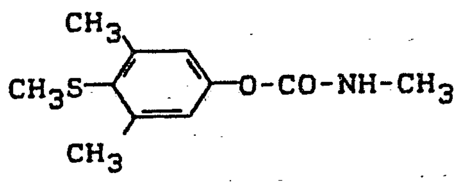

bei Raumtemperatur innig vermischt. Danach werden noch 1,1 kg 25 %ige wäßrige Polyvinylacetat-Dispersion und 0,6 kg fein gemahlenes N-Methyl-O-(3,5-dimethyl-4-methyl-thio-phenyl)-carbamat zugegeben. Man mischt weitere 5 min und trocknet dann in dem Mischer bei einer Abluft-Temperatur von max. 60° C. Man erhält auf diese Weise 42 kg Teilchen-Granulat mit einem Schüttvolumen von 300 ml pro 100 g

Teilchendurchmesser: 2 - 5 mm
Wirkstoffgehalt : 3 Gew.-%

### Beispiel 2

In einem Mischer werden 22 kg Rindenspäne (Siebfraktion 2 - 4 mm) mit 14 kg Weizenmehl, 40 g eines unter dem Namen Preventol® A2 auf dem Markt befindlichen Konservierungsmittel auf Basis von Dithiocarbaminat, 6 kg 0,5 %iger wäßriger Methylcellulose-Dispersion, 1,2 kg 30 %iger wäßriger Polyvinylacetat-Dispersion, 55 g Melasse, 100 g hochdisperser Kieselsäure, 200 g blauem Farbstoff und 0,6 kg fein gemahlenem N-Methyl-O-(3,5-dimethyl-4-methylthio-phenyl)-carbamat der Formel

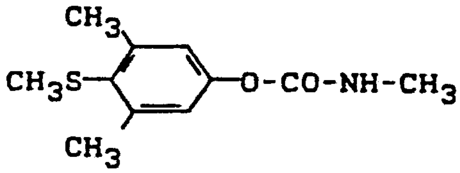

bei Raumtemperatur innig vermischt. Danach werden noch 1,2 kg 30 %ige wäßrige Polyvinylacetat-Dispersion und 0,6 kg fein gemahlenes N-Methyl-O-(3,5-dimethyl-4-methylthio-phenyl)-carbamat zugegeben. Man mischt weitere 5 min und trocknet dann in dem Mischer bei einer Abluft-Temperatur von max. 60°C. Man erhält auf diese Weise 40 kg Teilchen-Granulat mit einem Schüttvolumen von 380 ml pro 100 g.

Teilchendurchmesser : 2 - 5 mm
Wirkstoffgehalt : 3 Gew.-%

Beispiel 3

In einem Mischer werden 25 kg Maisspindel-Schrot (Siebfraktion 2 - 4 mm) mit 15 kg Weizenmehl, 6 kg 0,5 %iger wäßriger Methylcellulose-Dispersion, 1,2 kg 25 %iger wäßriger Polyvinylacetat-Dispersion, 55 g Melasse, 100 g hochdisperser Kieselsäure, 200 g blauem Farbstoff und 0,2 kg fein gemahlenem N-Methyl-O-(3,5-dimethyl-4-methylthio-phenyl)-carbamat der Formel

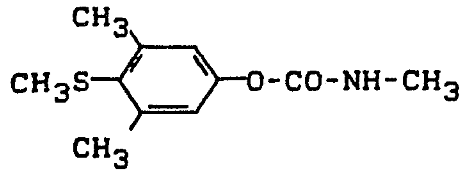

bei Raumtemperatur innig vermischt. Danach werden noch 1,2 kg 25 %ige wäßrige Polyvinylacetat-Dispersion und 0,36 kg fein gemahlenes N-Methyl-O-(3,5-dimethyl-4-methylthio-phenyl)-carbamat zugegeben. Man mischt weitere 5 min und trocknet dann in dem Mischer bei einer Abluft-Temperatur von max. 60°C. Man erhält auf diese Weise 42 kg Teilchen-Granulat mit einem Schüttvolumen von 385 ml pro 100 g.

Teilchendurchmesser : 2 - 5 mm
Wirkstoffgehalt : 1,4 Gew.-%

Beispiel 4

In einem Mischer werden 25 kg Maisspindel-Schrot (Siebfraktion 2 - 4 mm) mit 15 kg Weizenmehl, 6 kg 0,5 %iger wäßriger Methylcellulose-Dispersion, 1,2 kg 25 %iger wäßriger Polyvinylacetat-Dispersion, 60 g Melasse, 92 g hochdisperser Kieselsäure, 200 g blauem Farbstoff, 1,2 kg gemahlenem Metaldehyd der Formel

$$(CH_3\text{-}CHO)_{4-6}$$

innig vermischt. Danach werden noch 1,2 kg 25 %ige wäßrige Polyvinylacetat-Dispersion und 2,16 kg gemahlener Metaldehyd zugegeben. Man mischt weitere 5 min und trocknet äußerst schonend unter reduziertem Druck. Man erhält auf diese Weise 44 kg Teilchen-Granulat mit einem Schüttvolumen von 365 ml pro 100 g.

Teilchendurchmesser : 2 - 5 mm
Wirkstoffgehalt : 8,4 Gew.-%

II. Verwendungsbeispiele

In den nachfolgenden Verwendungsbeispielen wurden die nachstehend angegebenen Vergleichspräparate eingesetzt:

(I) = Handelsübliches Schneckenkorn auf Basis von Metaldehyd
Wirkstoffgehalt: 6,7 Gew.-%

(II) = Handelsübliches Schneckenkorn (Extruder-Granulat) auf Basis von N-Methyl-O-(3,5-dimethyl-4-methylthio-phenyl)-carbamat
Wirkstoffgehalt: 4 Gew.-%

Beispiel A

Bekämpfung von Schnecken

Versuchstier: Rote Wegschnecke (Arion rufus)

In quadratischen Holzkästen mit einer Grundfläche von 0,25 $m^2$ wird der Boden mit einer 2 bis 3 cm hohen Schicht Komposterde bedeckt, die vor Versuchsbeginn angefeuchtet wird. Anschließend wird das zu prüfende Präparat in der jeweils gewünschten Aufwandmenge auf der Hälfte der zur Verfügung stehenden Versuchsfläche pro Kasten ausgebracht. Ferner werden in jeden Kasten in 2 diagonal gegenüberliegenden Ecken 2 Kartoffelhälften als Beifutter gegeben. Danach werden in jeden Kasten 10 Versuchstiere gesetzt.

Nach 7 Tagen wird die Anzahl der toten Versuchstiere ermittelt und in Prozent ausgedrückt. Dabei bedeutet 0 %, daß keine toten Tiere vorhanden sind, während 100 % eine vollständige Abtötung der Versuchstiere bezeichnet.

Während der gesamten Versuchsdauer wird die Temperatur auf 19°C und die relative Luftfeuchtigkeit auf 90 bis 95 % gehalten.

Eingesetzte Präparate, Aufwandmengen und Versuchsergebnisse gehen aus der folgenden Tabelle hervor.

Tabelle A

Bekämpfung von Schnecken/Arion rufus

| Präparat | Aufwandmenge an Präparat pro Kasten [in g] | Aufwandmenge an Wirkstoff pro Kasten [in g] | Mortalitätsrate nach 7 Tagen [in %] |
|---|---|---|---|
| - (Kontrolle) | - | - | 0 |
| (I) (bekannt) | 3,125 | 0,209 | 30 |
| (II) (bekannt) | 3,125 | 0,125 | 100 |
| Schnecken-Korn (erfindungsgemäß nach Beispiel 1) | 3,125 | 0,094 | 93,3 |

Beispiel B

Schneckenkorn-Präparate / Witterungsbeständigkeit

Im Gewächshaus wird die jeweils gewünschte Menge an Schneckenkorn-Präparat auf feuchte Erde gestreut und im Abstand von jeweils 2 Tagen mit Wasser besprüht. Während der gesamten Versuchsdauer wird die Temperatur auf 19°C und die relative Luftfeuchtigkeit auf 90 bis 95 % gehalten.

7 Tage nach Versuchsbeginn wird der Schimmelbefall auf den Präparaten anhand der folgenden Skala bonitiert:

0 = kein Schimmelbefall
1 = leichter Schimmelbefall
2 = starker Schimmelbefall
3 = sehr starker Schimmelbefall

8 Tage nach Versuchsbeginn wird der Wirkstoffgehalt auf den Präparaten ermittelt und wie folgt bonitiert:

0 = Wirkstoff vollständig vorhanden bzw. Präparat unzerstört
1 = Wirkstoff zu weniger als 10 % abgewaschen, bzw. Präparat zu weniger als 10 % zerfallen
2 = Wirkstoff zu mehr als 10 % aber weniger als 50 % abgewaschen, bzw. Präparat zu mehr als 10 % aber weniger als 50 % zerfallen

3 = Wirkstoff zu mehr als 50 % aber weniger als 90 % abgewaschen, bzw. Präparat zu mehr als 50 % aber weniger als 90 % zerfallen

4 = Wirkstoff vollständig abgewaschen, bzw. Präparat vollständig zerfallen.

Eingesetzte Präparate und Versuchsergebnisse gehen aus der folgenden Tabelle hervor:

Tabelle B

Schneckenkorn-Präparate / Witterungsbeständigkeit

| Präparat | Schimmelbefall nach 7 Tagen | Wirkstoffgehalt nach 8 Tagen |
|---|---|---|
| (I) (bekannt) | 3 | 4 |
| (II) (bekannt) | 2 | 3 |
| Schnecken-korn (erfindungsgemäß gemäß Beispiel 1) | 1 | 2 |

0248991

Patentansprüche

1. Schneckenköder, dadurch gekennzeichnet, daß sie aus folgenden Komponenten bestehen:

A) natives Trägermaterial
B) molluskizider Wirkstoff
C) Fraßstoff
D) hydrolysestabiles Bindemittel und
E) gegebenenfalls weitere Zusatzstoffe.

2. Schneckenköder gemäß Anspruch 1), dadurch gekennzeichnet, daß es sich bei dem nativen Trägermaterial um native Abfallprodukte der Reihe Kleie, Maiskolbenschrot, Kokosschalenbruch, Tabakstengel, Korkschrot, Sägespäne, Rindenspäne handelt.

3. Schneckenköder gemäß Anspruch 1) bis 2), dadurch gekennzeichnet, daß es sich bei dem molluskiziden Wirkstoff um ein Carbamat handelt.

4. Schneckenköder gemäß Anspruch 1) - 3), dadurch gekennzeichnet, daß es sich bei dem molluskiziden Wirkstoff um N-Methyl-O-(3,5-dimethyl-4-methylthiophenyl)-carbamat handelt.

5. Schneckenköder gemäß Anspruch 1), dadurch gekennzeichnet, daß es sich beim eingesetzten Fraßstoff um einen Fraßstoff der Reihe gemahlenes Getreide, Reisstärke, Melasse, Weizenschrot, Gerstenschrot, Weizenmehl, Roggenmehl handelt.

6. Schneckenköder gemäß Anspruch 1), dadurch gekennzeichnet, daß es sich bei dem hydrolysestabilen Bindemittel um einen organischen Kleber handelt.

7. Schneckenköder, gemäß Anspruch 1), dadurch gekennzeichnet, daß es sich bei dem hydrolysestabilen Bindemittel um einen organischen Kleber der Reihe Methylcellulose, Polyvinylpyrrolidon, Polyvinylalkohol, Polyvinylacetat, Polyvinylether, Polyethylenglykole, Polyacrylate, Polyethylenoxide, natürliche Wachse (pflanzlichen, tierischen oder mineralischen Ursprungs), chemisch veränderte Wachse und synthetische Wachse (Polyethylenwachse), Polymethacrylate, Polypropylenglykole, Zucker, Dextrin, Stärke, Alginate, Ligninsulfonate, Gummiarabicum, veredelte Produkte aus Kolophonium und Ölen, Nitrolacke und Kunstharzlacke (Basis:Alkydharz, Chlorkautschukverbindungen, Epoxidharze, Polyesterharze, Polyurethane, Phenolharze, Aminharze, chloriertes Polypropylen, Cyclokautschukverbindungen, Ketonharze) handelt.

8. Schneckenköder gemäß Anspruch 1, dadurch gekennzeichnet, daß als weitere Zusatzstoffe gegebenenfalls einer oder mehrere Stoffe der Reihe Konservierungsmittel, Farbstoffe, Schneckenlockstoffe, Mahlhilfsmittel, Warmblütler-Repellents, Wasser, organische Solventien enthalten sind.

9. Schneckenköder gemäß Anspruch 1, dadurch gekennzeichnet, daß sie

A) 30 bis 70 Gew.-% natives Trägermaterial,
B) 0,5 bis 10 Gew.-% molluskiziden Wirkstoff,
C) 10 bis 70 Gew.-% Fraßstoff und
D) 0,5 bis 10 Gew.-% hydrolysestabiles Bindemittel und
E) 0 bis 20 Gew.-% weitere Zusatzstoffe enthalten.

10. Verfahren zur Herstellung von Schneckenködern, welche aus folgenden Komponenten bestehen:

A) natives Trägermaterial,
B) molluskizider Wirkstoff,
C) Fraßstoff,
D) hydrolysestabiles Bindemittel und
E) gegebenenfalls weitere Zusatzstoffe,

dadurch gekennzeichnet, daß man das native Trägermaterial A) in einem Mischer vorgibt und entweder

a) nacheinander mit Bindemittel D), gegebenenfalls im Gemisch mit einem Verdünnungsmittel, versetzt und danach mit mindestens einem molluskiziden Wirkstoff B), Fraßstoff C), gegebenenfalls weiteren Zusatzstoffen E) und gegebenenfalls weiterem Bindemittel D), gegebenenfalls in Gegenwart eines Verdünnungsmittels, innig verrührt oder

b) zunächst mit Bindemittel D), gegebenenfalls im Gemisch mit einem Verdünnungsmittel, sowie mit Fraßstoff C) versetzt und danach mit mindestens einem molluskiziden Wirkstoff B) und mit weiterem Bindemittel D), gegebenenfalls im Gemisch mit einem Verdünnungsmittel und gegebenenfalls mit Zusatzstoffen E), innig verrührt,

die so erhaltenen Produkte gegebenenfalls trocknet und gegebenenfalls wiederholt in der angegebenen Weise behandelt.

11. Verwendung von Schneckenködern gemäß Anspruch 1) bis 9) zur Bekämpfung von Schnecken.